# EUROPEAN PATENT SPECIFICATION

(11) **EP 2 730 824 B1**
(45) Date of publication and mention of the grant of the patent: **18.03.2020**
(21) Application number: 12192272.8
(22) Date of filing: 12.11.2012
(51) Int. Cl.: F16K 27/02, F16K 27/04

(54) **Fluid control valve**
Flussregelventil
Valve de contrôle de fluide

(43) Date of publication of application: 14.05.2014
(73) Proprietor: ESBE AB, 333 75 Reftele (SE)
(72) Inventor: Celander, Filip, 330 21 Reftele (SE)
(74) Representative: AWA Sweden AB

(56) References cited:
- FR-A1- 2 853 947
- GB-A- 973 345
- US-A- 1 878 288
- US-A- 3 771 562
- US-A- 4 623 002

## Description

### Field of the Invention

The present invention relates to a fluid control valve comprising a valve body with a valve chamber extending along a valve centre axis, and a valve member which is arranged in the valve chamber for controlling at least a first flow of fluid through the control valve.

### Background of the Invention

A fluid control valve of this type may be used as a mixing and/or diverting valve.

US 3 771 562 discloses a control valve that may be used for flow divergence (diverting) and flow convergence (mixing). It is known to manufacture the valve body of such a control valve by means of casting. However, this method has the drawback that the casted valve body may be porous and may have cracks, which may result in leakage when the control valve is used. A subsequent heat treatment is often required in order to improve the mechanical properties of the casted valve body. Although such a heat treatment may improve the mechanical properties to some extent leakage problems may remain unsolved.

GB 329 359 discloses a method of producing a valve body in which flow channels of the valve body are formed by forming mandrels. A valve body formed according to this method, i.e. a forged valve body, is of greater strength than casted valve bodies and may prevent leakage. However, the controllability of a control valve with a valve body manufactured according to the method disclosed in GB 329 359 may be considered limited.

GB 973 345 A describes a forged valve housing, and method and apparatus for producing the same.

FR 2 853 947 A1 describes a fluid control valve with a molded and machined body.

US 1 878 288 A describes a forged steel valve with drilled fluid passageways. 5

US 4 623 002 A describes a polymer control valve with outflow passages bored into the valve body.

### Summary of the Invention

It is an object of the present invention to overcome the above described drawbacks, and to provide an improved fluid control valve that can be manufactured in a cost-efficient manner. This and other objects that will be apparent from the following summary and description are achieved by a control valve according to the appended claims. According to one aspect of the present disclosure there is provided a fluid control valve comprising a valve body with a valve chamber extending along a valve centre axis, and a valve member which is arranged in the valve chamber for controlling at least a first flow of fluid through the control valve, wherein the valve body comprises a first flow channel having an inner opening fluidly connected to the valve chamber and an outer connection opening and extending along a first flow channel axis being angled with respect to the valve centre axis, and a second flow channel having an inner opening fluidly connected to the valve chamber and an outer connection opening and extending along a second flow channel axis being parallel to and offset from the first flow channel axis, wherein the outer connection opening of the first flow channel and the outer connection opening of the second flow channel are aligned along a common axis, and wherein at least one of the first and second flow channels is formed by an impression of a kernel retracted along a respective flow channel axis.

The outer openings of the first and second flow channels are aligned on a common axis. This facilitates machining, such as e.g. threadening of connection parts of the valve body, needed for the completion of a control valve body, thereby allowing the control valve to be formed in a cost-efficient manner. Furthermore, it facilitates installation of the control valve in a piping system.

Since the first and second flow channels are angled with respect to the valve centre axis the inner openings of the first and second flow channels, i.e. the openings communicating with the valve chamber, may be relatively large, which enables a relatively low pressure drop over the control valve, although the outer connection openings are aligned on a common axis. Also, this enables improved controllability since a relatively long valve member stroke may be utilized. Hence, a control valve with great controllability and compact installation height may be provided. The first and second flow channels are formed from an impression of a kernel retracted along a respective flow channel axis. This enables the valve body to be formed in a very cost-efficient manner by a forging process. Furthermore, leakage may be prevented by a valve body formed this way.

According to one embodiment each of the first and second flow channels is formed by an impression of a kernel retracted along a respective flow channel axis.

According to one embodiment at least a part of the valve chamber is formed by an impression of a kernel retracted along the valve centre axis.

The valve member may be a valve plunger, a valve disc or a valve ball.

According to one embodiment the valve body is a forged valve body formed from a metallic material. The metallic valve body may be formed from a material selected from the group consisting of copper alloys, iron alloys and aluminium alloys. Preferably, the valve body is formed from brass.

According to one embodiment the valve body is an injection molded valve body formed from a polymeric material. Then, the valve body may be formed from a thermoplastic material.

According to one embodiment the valve body comprises a third flow channel extending along the valve centre axis.

According to one embodiment the third flow channel is formed by an impression of a kernel retracted along the valve centre axis.

According to one embodiment the valve member is movable along the valve centre axis between a first position, in which the inner opening of the first flow channel is at least partly closed by the valve member, and a second position, in which the inner opening of the second flow channel is at least partly closed by the valve member.

According to one embodiment the valve member is open to lengthwise flow therethrough. This embodiment has the advantage that a relatively low control force is required to move the valve member.

According to one embodiment, the valve body comprises a first and a second valve seat arranged on opposite sides, as seen along the valve centre axis, of the inner opening of the first flow channel and the valve member is provided with a first and a second sealing member, wherein the first and second sealing members are arranged to be seated against the first and second valve seats, respectively, when the valve member assumes a first valve member position, to close the inner opening of the first flow channel by the valve member in the first valve member position. Then, a clearance between the outer surface of the valve member and the surrounding surface of the housing may be allowed, which may reduce the control force required to move the valve member significantly. Furthermore, the sealing members provide for a very reliable and robust sealing when the valve member assumes the first valve member position. Hence, a third sealing member, arranged in the valve body and in contact with the valve member, may be avoided since sufficient sealing in the first position may be provided by the first and second sealing members.

Each of the first and second sealing members may be a separate sealing element, e.g. a resilient sealing ring. Alternatively, each of the first and second sealing members may be integrally formed with the valve member.

According to a preferred embodiment, each of the first and second valve seats is an annular valve seat extending around the periphery of the valve member.

According to a preferred embodiment, each of the first and second sealing members is an annular sealing member extending around the periphery of the valve member.

Preferably, the valve body comprises a third and a fourth valve seat arranged on opposite sides, as seen along the valve centre axis, of the inner opening of the second flow channel wherein the first and second sealing members are arranged to be seated against the third and fourth valve seats, respectively, when the valve member assumes a second valve member position, to close the inner opening of the second flow channel by the valve member in the second valve member position, in order to provide for a very reliable and robust sealing in a second valve member position.

Each of the first and second sealing members is preferably an O-ring.

Preferably, in each of the respective first and second flow channels the cross-sectional area of the respective outer connection opening is greater than the cross-sectional area of the respective inner opening.

Preferably, each of the first and second flow channels extends at an angle in the range of 30-80 degrees, more preferably in the range of 45-75 and most preferably in the range of 60-70 degrees measured with respect to the valve centre axis.

According to another aspect of the present disclosure, there is provided a method of forming a valve body with a first flow channel extending along a first flow channel axis being angled with respect to a valve centre axis and a second flow channel extending along a second flow channel axis being parallel to and offset from the first flow channel axis, wherein an outer connection opening of the first flow channel and an outer connection opening of the second flow channel are aligned along a common axis, wherein the method comprises placing a heated workpiece in a forming tool cavity, pressing a first forging kernel into the workpiece along the first flow channel axis for forming the first flow channel and pressing a second forging kernel into the workpiece along the second flow channel axis for forming the second flow channel and retracting each of the first and second forging kernels from the workpiece along a respective flow channel axis.

Preferably, the first and second forging kernels are simultaneously pressed into the workpiece.

According to one embodiment the method comprises the step of pressing a third forging kernel into the workpiece along the valve centre axis for forming a third flow channel.

According to one embodiment the method comprises the step of pressing a fourth forging kernel into the workpiece along the valve centre axis for forming a fourth flow channel.

These and other aspects of the invention will be apparent from and elucidated with reference to the claims and the embodiments described hereinafter.

### Brief description of the drawings

The invention will now be described in more detail with reference to the appended drawings in which:
Fig. 1a is a schematic sectional view of a control valve according to an embodiment of the present disclosure.
Figs. 1b-d illustrate the function of the control valve shown in Fig. 1a.
Fig. 2 is a schematic sectional view of a control valve according to a second embodiment of the present disclosure.
Fig. 3 is a schematic sectional view of a control valve according to a third embodiment of the present disclosure.
Fig. 4a is a schematic perspective view illustrating a forming die used in a method of forming a control valve body according to an embodiment of the present disclosure.
Figs. 4b-c are schematic views illustrating a method for forming a valve body according to an embodiment of the present disclosure.

### Description of preferred embodiments

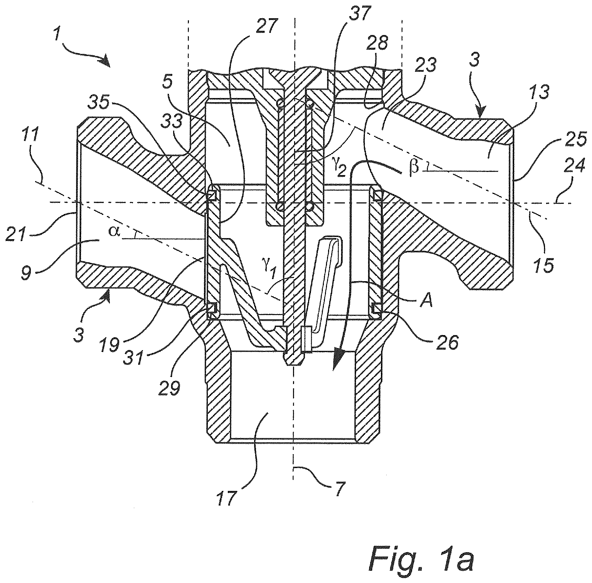

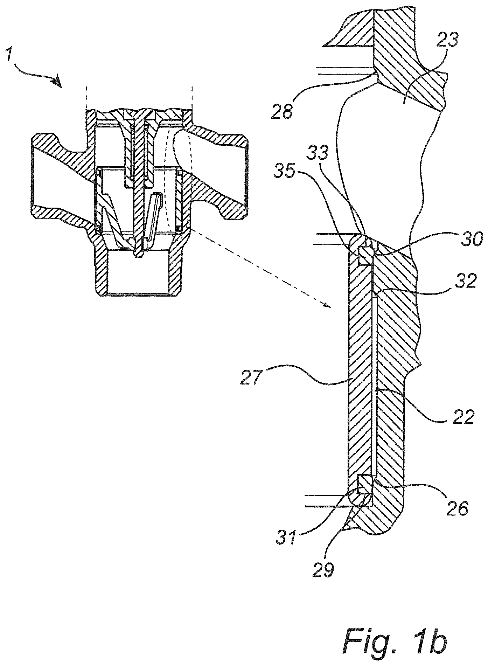

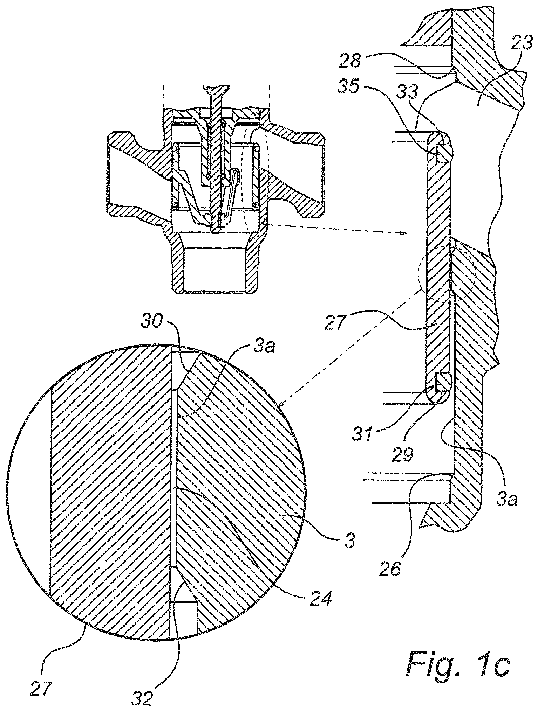

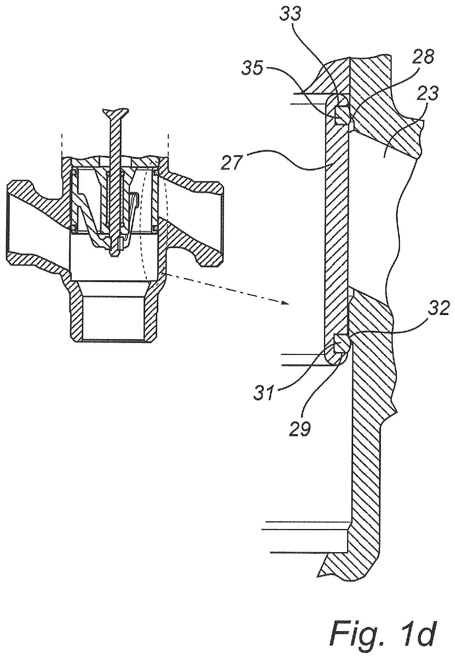

Fig. 1 illustrates a fluid control valve 1 according to an embodiment of the present disclosure. The control valve 1 may be used e.g. for controlling heating and cooling systems in buildings. The control valve 1 may be connected as a mixing valve to mix two streams of fluid. Alternatively, the control valve 1 may be connected as a change-over valve or diverting valve.

The control valve 1 comprises a forged valve body 3. The forged valve body 3 has a valve chamber 5 extending along a valve centre axis 7, a first flow channel 9 extending along a first flow channel axis 11 and a second opposite flow channel 13 extending along a second flow channel axis 15. The valve body 3 further comprises a third flow channel 17 extending along the valve centre axis 7. Each of the first 11 and second 15 flow channel axes is angled with respect to the valve centre axis 7. Furthermore, the first 11 and second 15 flow channel axes are parallel to and offset from each other. By "offset" is meant that the first flow channel axis 11 intersects the valve centre axis 7 in a position which is different from that position at which the second flow channel axis 15 intersects the valve centre axis 7.

The first flow channel 9 has an inner flow channel opening 19 which is fluidly connected to the valve chamber 5 and an outer flow channel opening 21, in the form of a connection opening, to which a pipe of a piping system (not shown) may be connected. The first flow channel 9 extends along the first flow channel axis 11 at an angle γ₁ with respect to the valve centre axis 7, as illustrated in Fig. 1a. Preferably, the first flow channel 9 extends along the flow channel axis 11 at an angle γ₁ in the range of 30-80 degrees, more preferably at an angle γ₁ in the range of 45-75 degrees and most preferably at an angle γ₁ in the range of 60-70 degrees measured with respect to the valve centre axis 7.

The second flow channel 13 has an inner flow channel opening 23 which is fluidly connected to the valve chamber 5 and an outer flow channel opening 25, in the form of a connection opening, to which another pipe of the piping system (not shown) may be connected. The second flow channel 13 extends along the second flow channel axis 11 at an angle γ₂ with respect to the valve chamber centre axis 7, as illustrated in Fig. 1a. Preferably, the second flow channel 13 extends along the second flow channel axis 15 at an angle γ₂ in the range of 30-80 degrees, more preferably at an angle γ₂ in the range of 45-75 and most preferably at an angle γ₂ in the range of 60-70 degrees measured with respect to the valve centre axis 7. In this embodiment each of the first 9 and second 13 flow channels extends at an angle γ of about 76 degrees with respect to the valve centre axis 7, i.e. γ₁ = γ₂ = 76 degrees. Hence, each of the first 11 and second 13 flow channels extends at an angle γ different from 90 degrees measured with respect to the valve centre axis 7.

The outer connection opening 21 of the first flow channel 9 and the outer connection opening 25 of the second flow channel 13 are aligned along a common axis 24, as illustrated in Fig. 1a. This facilitates fitting of the control valve 1 in a piping system (not shown). Hence, the connection opening 21 of the first flow channel 9 and the connection opening 25 of the second flow channel 13 are located at the same level as seen along the valve chamber axis 7.

The inner 19 and outer 21 openings of the first flow channel 9 are offset from each other. Hence, the inner 19 and outer 21 openings are located at different levels as seen along the valve chamber axis 7. Similarly, the inner 23 and outer 25 openings of the second flow channel 13 are offset from each other and thus located at different levels as seen along the valve chamber axis 7.

The control valve 1 further comprises a valve member, in the form of a valve plunger 27. The valve plunger 27 is arranged in the valve chamber 5 of the valve body 3. The valve plunger 27 is hollow and is thus open to flow therethrough, as illustrated by arrow A in Fig. 1a. The valve plunger 27 is movable between a first position, illustrated in Figs. 1a and 1b, in which the inner opening 19 of first flow channel 9 is closed by the valve plunger 27, and a second position, illustrated in Fig. 1d, in which the inner opening 23 of the second flow channel 13 is closed by the valve plunger 27. Hence, in the first plunger position fluid communication between the first flow channel 9 and the valve chamber 5 is blocked by the valve plunger 27 and in the second plunger position fluid communication between the second flow channel 13 and the valve chamber 5 is blocked by the valve plunger 27. When the valve plunger 27 assumes the first plunger position there is thus fluid communication between the third flow channel 17 and the second flow channel 13 and when the valve plunger 27 assumes the second plunger position there is fluid communication between the third flow channel 17 and the first flow channel 9. The valve plunger 27 may assume different intermediate positions, one of which is illustrated in Fig. 1c, to control flow of liquid through the control valve 1. By varying the longitudinal position of the valve plunger 27 in the valve chamber 5 the flow of liquid through the control valve 1 may thus be controlled in different ways.

The valve plunger 27 has a first circumferential groove 29 in which a first annular sealing member, in the form of a resilient sealing ring 31, is arranged and a second circumferential groove 33 in which a second annular sealing member, in the form of a resilient sealing ring 35, is arranged.

The valve body 3 comprises four valve seats 26, 32, 30, 28, as best illustrated in the enlarged parts of Figs. 1b-d. In the first position the first 31 and second 35 sealing rings are seated against the first 26 and a second 32 valve seats, respectively, as illustrated in Fig. 1b. In the second position the first 31 and second 35 sealing rings are seated against the third 30 and fourth 28 valve seats, respectively, as illustrated in the enlarged part of Fig. 1d. The sealing rings 31, 35 secure the sealing function in the first and second valve plunger position, respectively.

Fig. 1c illustrates the valve member 27 in an intermediate position between the first and second valve member position. As illustrated in the enlarged parts of Fig. 1c there is a clearance 24 between the valve plunger 27 and the inner wall 3c. Also, there is a clearance between the sealing ring 31 and the inner wall 3a in the intermediate position. Hence, the valve plunger 17 runs freely, i.e. without contact with the inner wall 3a of the valve body 3, between the first and second valve member position.

The control valve 1 further comprises a valve actuator member, in the form of a valve stem 37 connected to the valve plunger 27, for operating the valve plunger 27. Furthermore, a motorized actuator (not shown) is connected to the valve stem 37 for controlling the operation of the valve plunger 27.

As mentioned hereinbefore the control valve 1 may e.g. be installed as a mixing valve to mix two streams of fluid. Then, the outer opening 21 of the first flow channel 9 may form a cold water inlet, the outer opening 25 of the second flow channel 13 may form a hot water inlet, the valve chamber 5 may form a fluid mixing chamber and the third flow channel 17 may form a water outlet. When the control valve 1 is installed as a mixing valve, the valve member 27 may be set in different intermediate mixing positions, in each of which a stream of fluid from the first inlet 9 and a stream of fluid from the second inlet 13 are mixed into a single stream of fluid flowing through the outlet 17.

Alternatively, the control valve 1 may be installed as a diverting valve to divert a stream of fluid into two streams of fluid. When the control valve 1 is installed as a diverting valve the valve member 27 may be set in different intermediate diverting positions (not shown), in each of which a single stream of fluid from the third flow channel 17 is diverted into a first stream of fluid flowing through the first flow channel 9 and a second stream of flow flowing through the second flow channel 13. Then, the third flow channel 17 forms a fluid inlet, the first flow channel 9 forms a first fluid outlet and the second flow channel 13 forms a second fluid outlet.

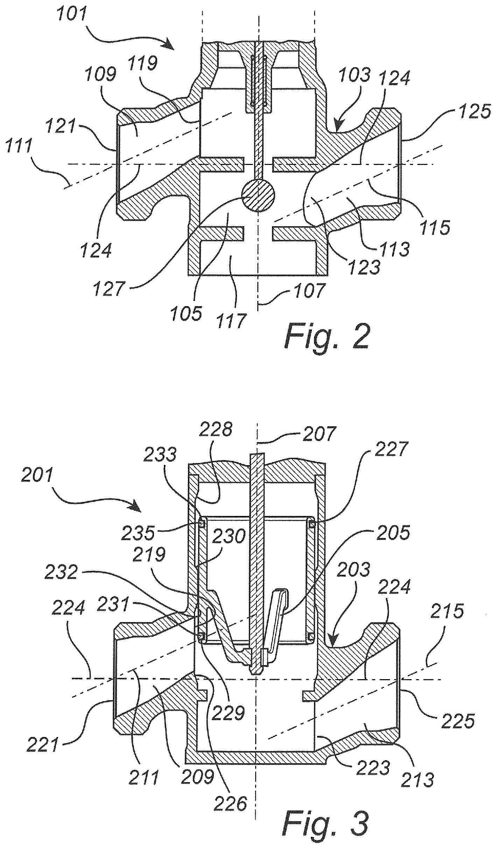

Fig. 2 illustrates a control valve 101 according to a second embodiment of the present disclosure. Many features disclosed in the first embodiment are also present in the second embodiment with similar reference numerals identifying similar or same features. Having mentioned this, the description will focus on explaining the differing features of the second embodiment.

The control valve 101 comprises a valve body 103. The valve body 103 has a valve chamber 105 extending along a valve chamber centre axis 107, a first flow channel 109 extending along a first flow channel axis 111 and a second flow channel 113 extending along a second flow channel axis 115. The valve body 103 further comprises a third flow channel 117 extending along the valve centre axis 107. Each of the first 109 and second 113 flow channels are angled with respect to the valve centre axis 107. Furthermore, the first 111 and second 115 flow channel axes are parallel to and offset from each other. An outer opening 121 of the first flow channel 109 and an outer opening 125 of the second flow channel 113 are aligned along a common axis 124, as illustrated in Fig. 2

In this embodiment the control valve 101 comprises a "closed" valve member, i.e. not open to flow therethrough, in the form of solid valve member 127, as illustrated in Fig. 2. It is realized that such a closed valve member may have another shape. For instance it may be disc-shaped or ball-shaped. The solid valve member 127 is movable between a first position (not shown), in which fluid communication between the third flow channel 117 and the valve chamber 105 is prevented by the valve member 127, and a second position (not shown), in which fluid communication between the first flow channel 109 and the valve chamber 105 is prevented. Hence, when the valve plunger 127 assumes the first position fluid communication between the first flow channel 109 and the second flow channel 113 is established and when the valve plunger 127 assumes the second position fluid communication between the first flow channel 109 and the second flow channel 113 is established.

The valve member 127 may further be set in different intermediate mixing positions, one of which is illustrated in Fig. 2, in which a stream of fluid from the first flow channel 109 and a flow from the second flow channel 113 are mixed.

Fig. 3 illustrates a control valve 201 according to a third embodiment of the present disclosure. Many features disclosed in embodiments described hereinbefore are also present in the third embodiment with similar reference numerals identifying similar or same features. Having mentioned this, the description will focus on explaining the differing features of the second embodiment.

The control valve 201 comprises a valve body 203. The valve body 203 has a valve chamber 205 extending along a valve chamber centre axis 207, a first flow channel 209, in the form of a fluid inlet, extending along a first flow channel axis 211 and a second flow channel 213, in the form of a fluid outlet, extending along a second flow channel axis 215. Each of the first 209 and second 213 flow channels are angled with respect to the valve centre axis 207. Furthermore, the first 211 and second 215 flow channel axes are parallel to and offset from each other. The outer opening 221 of the first flow channel 209 and the outer opening 225 of the second flow channel 213 are aligned along a common axis 224.

In this embodiment the control valve 201 comprises an "open" valve member 227. The valve member 227 is movable between a first position (not shown) in which fluid communication between the first 209 and second 213 flow channels is prevented by the valve member 227, and a second position (not shown) in which fluid communication between the first 209 and second 213 flow channels is established. The valve member 227 may further be set in different intermediate positions, one of which is illustrated in Fig. 3, in each of which a restricted stream of fluid may pass through the control valve 201.

The valve member 227 has a first circumferential groove 229 in which a first sealing ring 231 is arranged and a second circumferential groove 233 in which a second sealing ring 235, is arranged.

The valve body 203 comprises four valve seats 226, 232, 230, 228, as illustrated in Fig. 3. In the first valve member position, i.e. when the valve is closed, the first 231 and second 235 sealing rings are seated against the first 226 and second 232 valve seats, respectively. The sealing rings 231, 235 thus secure the sealing function in the first valve member position, i.e. when the flow through the valve is blocked by the valve plunger 227.

Hereinafter a method of forming a control valve body according to an embodiment of the present disclosure will be schematically described with reference to Figs. 2a-2c.

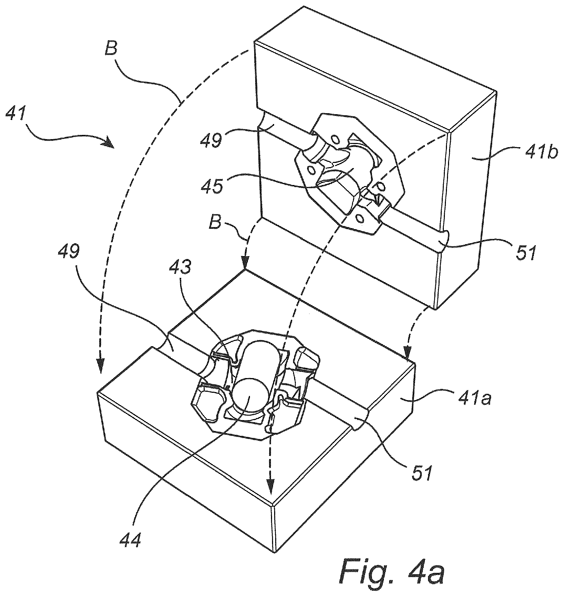

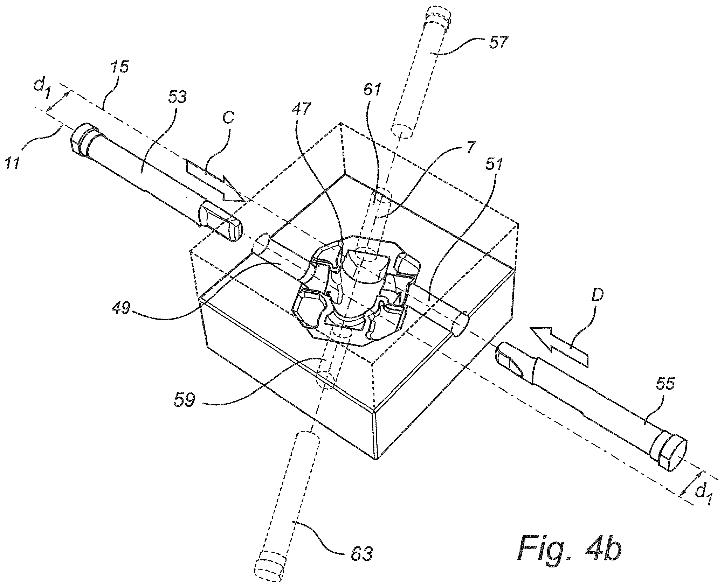

Fig. 4a schematically illustrates a forming die 41 for forming a valve body 3 with two opposite flow channels 9, 13 extending along a respective flow channel axis 11, 15. The forming die 41 comprises a lower die part 41a and an upper die part 41b, each having a cavity 43 and 45, respectively. The cavity 43 of the lower die part 41a and the cavity 45 of the upper die part 41b together form a forming cavity 47 when the forming die 41 is closed, as illustrated in Fig. 4b. The shape of the forming cavity 47 is adapted to form the outer shape of a valve body in a forging process. The forming die 41 further has a first kernel passage 49 through which a first forging kernel may be introduced in a direction towards a workpiece placed in the forming cavity 47 and a second kernel passage 51 through which a second forging kernel may be introduced towards the workpiece in an opposite direction. The kernel passages 49, 51 are parallel to and offset from each other.

In a first step of a method according to an embodiment of the present disclosure a heated workpiece 44, such as a brass workpiece, to be forged is placed in the first cavity 43 of the lower forming die part 41a. The forming die 41 is then closed and the die parts 41a, 41b are secured to each other, as schematically illustrated by the arrows B in Fig. 4a.

In a second step, a first forging kernel 53 is pressed through the first kernel passage 49 and into the workpiece along a first flow channel axis 11, as illustrated by the arrow C in Fig. 4b, for forming a first flow channel 9. The first flow channel axis 11 is angled with respect to a valve body centre axis 7. Simultaneously, a second forging kernel 55 is pressed through the second kernel passage 51 and into the workpiece along a second flow channel axis 11, as illustrated by the arrow D in Fig. 4b, for forming a second opposite flow channel 13. The second flow channel axis 11 is parallel to and offset from the first flow channel axis 11, as illustrated by d₁ in Fig. 4b. For clarity reasons the workpiece 44 is not shown in Fig. 4b.

In this embodiment the first 53 and second 55 forging kernels are thus simultaneously pressed into the workpiece. It is however appreciated that one of the first 53 and second 55 forging kernels may be pressed subsequent to the other one.

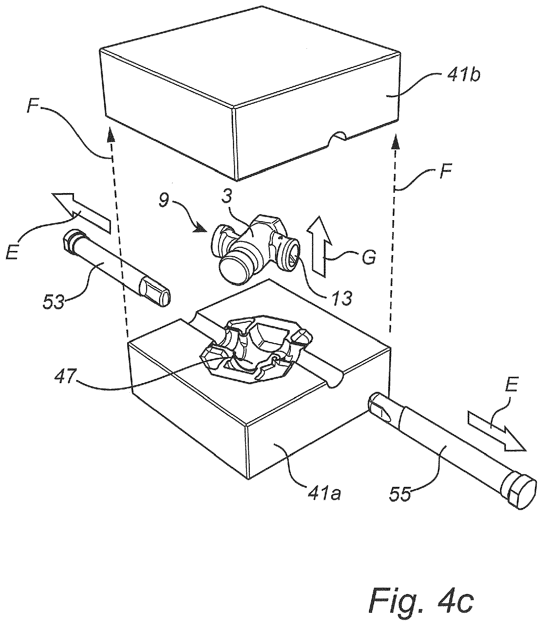

In a third step each of the forging kernels 53, 55 is retracted from the workpiece along a respective flow channel axis 11, 15, as illustrated by the arrows E in Fig. 4c.

Preferably, a draft angle is present to facilitate retraction of the first 53 and second 55 forging kernels from the workpiece.

Then, the forming die 41 is opened, i.e. the upper forming die part 41b is removed from the lower forming die part 41a, as illustrated by arrows F in Fig. 4c.

Finally, the forged valve body 3 is removed from the forming cavity 47 of the forming die 41, as illustrated by arrow G in Fig. 4c.

Prior to being assembled together with other parts of a control valve assembly the forged valve body is then machined, e.g. to form a valve chamber extending along the valve centre axis 7.

It will be appreciated that numerous variants of the embodiments described above are possible within the scope of the appended claims.

Hereinbefore is has been described that a first and a second forging kernel is pressed through guiding channels into a workpiece to form a valve body with flow channels. It is appreciated that further forging kernels, e.g. a third 57 and a fourth 63 forging kernel, may be pressed through a third 61 and a fourth 59 kernel passage, respectively, into a workpiece to form further flow channels, as schematically illustrated by the dotted forging kernels 57, 63 in Fig. 4b.

## Claims

1. Fluid control valve comprising a valve body (3) with
a valve chamber (5) extending along a valve centre axis (7), and
a valve member (27) which is arranged in the valve chamber (5) for controlling at least a first flow of fluid through the control valve,
**characterized in that**
the valve body (3) comprises:
a first flow channel (9) having an inner opening (19) fluidly connected to the valve chamber (5) and an outer connection opening (21) and extending along a first flow channel axis (11) being angled with respect to the valve centre axis (7), and
a second flow channel (13) having an inner opening (23) fluidly connected to the valve chamber (5) and an outer connection opening (25) and extending along a second flow channel axis (15) being parallel to and offset from the first flow channel axis (11),
wherein the outer opening (21) of the first flow channel (9) and the outer opening (25) of the second flow channel (13) are aligned along a common axis (24), and
wherein at least one (9) of the first (9) and second (13) flow channels is formed by an impression of a kernel retracted along a respective flow channel axis (11) of the valve body (3).

2. Fluid control valve according to claim 1, wherein the valve body (3) is a forged valve body formed from a metallic material.

3. Fluid control valve according to claim 2, wherein the valve body (3) is formed from a material selected from the group consisting of copper alloys, iron alloys and aluminium alloys.

4. Fluid control valve according to claim 3, wherein the valve body (3) is formed from brass.

5. Fluid control valve according to claim 1, wherein the valve body is an injection molded valve body formed from a polymeric material.

6. Fluid control valve according to claim 5, wherein the valve body is formed from a thermoplastic material.

7. Fluid control valve according to any of the preceding claims, wherein the valve body (3) comprises a third flow channel (17) extending along said valve centre axis (7).

8. Fluid control valve according to any of the preceding claims, wherein the valve member (27; 227) is open to lengthwise flow therethrough.

9. Fluid control valve according to claim 8, wherein the valve body (3, 203) comprises a first (26; 226) and a second (30; 230) valve seat arranged on opposite sides, as seen along the valve centre axis (7), of the inner opening (19; 219) of the first flow channel (9; 209) and the valve member (27; 227) is provided with a first (31; 231) and a second (35; 235) sealing member, wherein the first (31; 231) and second (35; 235) sealing members are arranged to be seated against the first (26; 226) and second (30; 230) valve seats, respectively, when the valve member (27; 227) assumes a first valve member position, to close the inner opening (19; 219) of the first flow channel (9; 209) by the valve member (27; 227) in the first valve member position.

10. Fluid control valve according to claim 9, wherein the valve body (3;203) comprises a third (32, 232) and a fourth (28, 228) valve seat arranged on opposite sides, as seen along the valve centre axis (7), of the inner opening (23; 223) of the second flow channel (13; 213) wherein the first (31, 231) and second (35; 235) sealing members are arranged to be seated against the third (32; 232) and fourth (28; 228) valve seats, respectively, when the valve member (27; 227) assumes a second valve member position, to close the inner opening (23; 223) of the second flow channel (13; 213) by the valve member (27; 227) in the second valve member position.

11. Fluid control valve according to any of claims 9-10, wherein each of the first (31; 231) and second (35; 235) sealing member is an O-ring.

12. Fluid control valve according to any of the preceding claims, wherein in each of the respective first and second flow channels (9, 13) the cross-sectional area of the respective outer connection opening (21, 25) is greater than the cross-sectional area of the respective inner opening (19, 23).

13. A method of forming a valve body (3) with a valve chamber (5) extending along a valve centre axis (7), a first flow channel (9) extending along a first flow channel axis (11) being angled with respect to the valve centre axis (7) and a second flow channel (13) extending along a second flow channel axis (15) being parallel to and offset from the first flow channel axis (11), wherein an outer opening (21) of the first flow channel (9) and an outer opening (25) of the second flow channel (13) are aligned along a common axis (24), said method comprising:
placing a heated workpiece (44) in a forming tool cavity (47),
pressing a first forging kernel (53) into the workpiece (44) along the first flow channel axis (11) for forming the first flow channel (9) and pressing a second forging kernel (55) into the workpiece (44) along the second flow channel axis (15) for forming the second flow channel (13),
retracting each of the first (53) and second (55) forging kernels from the workpiece (44) along a respective flow channel axis (11, 15).

14. Method according to claim 13, wherein the first (53) and second (55) forging kernels are simultaneously pressed into the heated workpiece (44).

15. Method according to any of claims 13-14, wherein the method comprises pressing a third forging kernel (57) into the workpiece (44) along the valve chamber centre axis (7).

## Patentansprüche

1. Fluidregelventil, umfassend einen Ventilkörper (3) mit
einer Ventilkammer (5), die sich entlang einer Ventilzentralachse (7) erstreckt, und
einem Ventilelement (27), das in der Ventilkammer (5) angeordnet ist, um mindestens einen ersten Fluidstrom durch das Regelventil zu regeln,
**dadurch gekennzeichnet, dass**
der Ventilkörper (3) Folgendes umfasst:
einen ersten Fließkanal (9) mit einer inneren Öffnung (19), die strömungstechnisch an die Ventilkammer (5) und eine äußere Anschlussöffnung (21) angeschlossen ist und sich entlang einer ersten Fließkanalachse (11) erstreckt, die in Bezug auf die Ventilzentralachse (7) abgewinkelt ist, und
einen zweiten Fließkanal (13) mit einer inneren Öffnung (23), die strömungstechnisch an die Ventilkammer (5) und eine äußere Anschlussöffnung (25) angeschlossen ist und sich entlang einer zweiten Fließkanalachse (15) erstreckt, die parallel und versetzt zu der ersten Fließkanalachse (11) verläuft,
wobei die äußere Öffnung (21) des ersten Fließkanals (9) und die äußere Öffnung (25) des zweiten Fließkanals (13) entlang einer gemeinsamen Achse (24) angeordnet sind, und
wobei mindestens einer (9) von dem ersten (9) und dem zweiten (13) Fließkanal durch einen Eindruck eines Kerns geformt wird, der entlang einer jeweiligen Fließkanalachse (11) des Ventilkörpers (3) zurückgezogen wird.

2. Fluidregelventil nach Anspruch 1, wobei der Ventilkörper (3) ein aus einem Metallmaterial geformter, geschmiedeter Ventilkörper ist.

3. Fluidregelventil nach Anspruch 2, wobei der Ventilkörper (3) aus einem Material geformt ist, das aus der Gruppe ausgewählt ist, bestehend aus Kupferlegierungen, Eisenlegierungen und Aluminiumlegierungen.

4. Fluidregelventil nach Anspruch 3, wobei der Ventilkörper (3) aus Messing geformt ist.

5. Fluidregelventil nach Anspruch 1, wobei der Ventilkörper ein spritzgegossener Ventilkörper ist, der aus einem polymeren Material geformt ist.

6. Fluidregelventil nach Anspruch 5, wobei der Ventilkörper aus einem thermoplastischen Material geformt ist.

7. Fluidregelventil nach einem der vorstehenden Ansprüche, wobei der Ventilkörper (3) einen dritten Fließkanal (17) umfasst, der sich entlang der Ventilzentralachse (7) erstreckt.

8. Fluidregelventil nach einem der vorstehenden Ansprüche, wobei das Ventilelement (27; 227) für den Durchfluss in Längsrichtung offen ist.

9. Fluidregelventil nach Anspruch 8, wobei der Ventilkörper (3, 203) einen ersten (26; 226) und einen zweiten (30; 230) Ventilsitz umfasst, die, entlang der Ventilzentralachse (7) gesehen, auf entgegengesetzten Seiten der inneren Öffnung (19; 219) des ersten Fließkanals (9; 209) angeordnet sind, und das Ventilelement (27; 227) mit einem ersten (31; 231) und einem zweiten (35; 235) Dichtelement versehen ist, wobei das erste (31; 231) und das zweite (35; 235) Dichtelement angeordnet sind, um jeweils gegen den ersten (26; 226) und zweiten (30; 230) Ventilsitz gesetzt zu werden, wenn das Ventilelement (27; 227) eine erste Ventilelementposition einnimmt, um die innere Öffnung (19; 219) des ersten Fließkanals (9; 209) durch das Ventilelement (27; 227) in der ersten Ventilelementposition zu schließen.

10. Fluidregelventil nach Anspruch 9, wobei der Ventilkörper (3; 203) einen dritten (32, 232) und einen vierten (28, 228) Ventilsitz umfasst, die, entlang der Ventilzentralachse (7) gesehen, auf entgegengesetzten Seiten der inneren Öffnung (23; 223) des zweiten Fließkanals (13; 213) angeordnet sind, wobei das erste (31, 231) und das zweite (35; 235) Dichtelement angeordnet sind, um jeweils gegen den dritten (32; 232) und vierten (28; 228) Ventilsitz gesetzt zu werden, wenn das Ventilelement (27; 227) eine zweite Ventilelementposition einnimmt, um die innere Öffnung (23; 223) des zweiten Fließkanals (13; 213) durch das Ventilelement (27; 227) in der zweiten Ventilelementposition zu schließen.

11. Fluidregelventil nach einem der Ansprüche 9 - 10, wobei jedes von erstem (31; 231) und zweitem (35; 235) Dichtelement ein O-Ring ist.

12. Fluidregelventil nach einem der vorstehenden Ansprüche, wobei in jedem der jeweiligen ersten und zweiten Fließkanäle (9, 13) die Querschnittsfläche der jeweiligen äußeren Anschlussöffnung (21, 25) größer ist als die Querschnittsfläche der jeweiligen inneren Öffnung (19, 23).

13. Verfahren zum Formen eines Ventilkörpers (3) mit einer Ventilkammer (5), die sich entlang einer Ventilzentralachse (7) erstreckt, einem ersten Fließkanal (9), der sich entlang einer ersten Fließkanalachse (11) erstreckt, die in Bezug auf die Ventilzentralachse (7) gewinkelt ist, und einem zweiten Fließkanal (13), der sich entlang einer zweiten Fließkanalachse (15) erstreckt, die parallel und versetzt zu der ersten Fließkanalachse (11) verläuft, wobei eine äußere Öffnung (21) des ersten Fließkanals (9) und eine äußere Öffnung (25) des zweiten Fließkanals (13) entlang einer gemeinsamen Achse (24) ausgerichtet sind, das Verfahren umfassend:
Platzieren eines erhitzten Werkstücks (44) in eine Formwerkzeugkavität (47),
Pressen eines ersten Schmiedekerns (53) in das Werkstück (44) entlang der ersten Fließkanalachse (11), um den ersten Fließkanal (9) zu formen, und Pressen eines zweiten Schmiedekerns (55) in das Werkstück (44) entlang der zweiten Fließkanalachse (15), um den zweiten Fließkanal (13) zu formen,
Zurückziehen von dem ersten (53) und dem zweiten (55) Schmiedekern aus dem Werkstück (44) entlang einer jeweiligen Fließkanalachse (11, 15).

14. Verfahren nach Anspruch 13, wobei der erste (53) und der zweite (55) Schmiedekern gleichzeitig in das erhitzte Werkstück (44) gepresst werden.

15. Verfahren nach einem der Ansprüche 13 - 14, wobei das Verfahren Pressen eines dritten Schmiedekerns (57) in das Werkstück (44) entlang der Ventilkammerzentralachse (7) umfasst.

## Revendications

1. Valve de contrôle de fluide comprenant un corps de valve (3) comportant
une chambre de valve (5) s'étendant le long d'un axe central de valve (7), et
un élément valve (27) qui est disposé dans la chambre de valve (5) pour contrôler au moins un premier écoulement de fluide à travers la valve de contrôle,
**caractérisée en ce que**
le corps de valve (3) comprend :
un premier canal d'écoulement (9) doté d'une ouverture intérieure (19) en connexion fluidique avec la chambre de valve (5) et d'une ouverture de connexion extérieure (21) et s'étendant le long d'un axe de premier canal d'écoulement (11) décrivant un angle par rapport à l'axe central de valve (7), et
un deuxième canal d'écoulement (13) doté d'une ouverture intérieure (23) en connexion fluidique avec la chambre de valve (5) et d'une ouverture de connexion extérieure (25) et s'étendant le long d'un deuxième axe de canal d'écoulement (15) qui est parallèle à et décalé de l'axe de premier canal d'écoulement (11),
l'ouverture extérieure (21) du premier canal d'écoulement (9) et l'ouverture extérieure (25) du deuxième canal d'écoulement (13) étant alignées le long d'un axe commun (24), et
au moins un (9) parmi les premier (9) et deuxième (13) canaux d'écoulement étant formé par impression d'un noyau rétracté le long d'un axe de canal d'écoulement respectif (11) du corps de valve (3).

2. Valve de contrôle de fluide selon la revendication 1, dans laquelle le corps de valve (3) est un corps de valve forgé composé d'un matériau métallique.

3. Valve de contrôle de fluide selon la revendication 2, dans laquelle le corps de valve (3) est formé d'un matériau sélectionné dans le groupe composé des alliages de cuivre, des alliages de fer et des alliages d'aluminium.

4. Valve de contrôle de fluide selon la revendication 3, dans laquelle le corps de valve (3) est formé de laiton.

5. Valve de contrôle de fluide selon la revendication 1, dans laquelle le corps de valve est un corps de valve moulé par injection formé d'un matériau polymérique.

6. Valve de contrôle de fluide selon la revendication 5, dans laquelle le corps de valve est formé d'un matériau thermoplastique.

7. Valve de contrôle de fluide selon l'une quelconque des revendications précédentes, dans laquelle le corps de valve (3) comprend un troisième canal d'écoulement (17) s'étendant le long dudit axe central de valve (7).

8. Valve de contrôle de fluide selon l'une quelconque des revendications précédentes, dans laquelle l'élément valve (27 ; 227) est ouvert à un écoulement en longueur à travers celui-ci.

9. Valve de contrôle de fluide selon la revendication 8, dans laquelle le corps de valve (3,203) comprend un premier (26 ; 226) et un deuxième (30 ; 230) sièges de valve disposés sur des faces opposées, vus le long de l'axe central de valve (7) de l'ouverture intérieure (19 ; 219) du premier canal d'écoulement (9 ; 209) et l'élément valve (27 ; 227) est pourvu d'un premier (31 ; 231) et d'un deuxième (35 ; 235) éléments d'étanchéité, les premier (31 ; 231) et deuxième (35 ; 235) éléments d'étanchéité étant conçus pour être assis contre les premier (26 ; 126) et deuxième (30 ; 230) sièges de valve respectivement lorsque l'élément valve (27 ; 227) prend une première position d'élément valve pour fermer l'ouverture intérieure (19 ; 219) du premier canal d'écoulement (9 ; 209) par l'élément valve (27 ; 127) dans la première position d'élément valve.

10. Valve de contrôle de fluide selon la revendication 9, dans laquelle le corps de valve (3 ; 203) comprend un troisième (32,232) et un quatrième (28,228) sièges de valve disposés sur des faces opposées, vus le long de l'axe central de valve (7) de l'ouverture intérieure (23 ; 223) du deuxième canal d'écoulement (13 ; 213), et les premier (31,231) et deuxième (35 ; 235) éléments d'étanchéité sont disposés de manière à être assis contre les troisième (32 ; 232) et quatrième (28 ; 228) sièges de valve respectivement lorsque l'élément valve (27 ; 227) prend une deuxième position d'élément valve pour fermer l'ouverture intérieure (23 ; 223) du deuxième canal d'écoulement (13 ; 213) par l'élément valve (27 ; 227) dans la deuxième position d'élément valve.

11. Valve de contrôle de fluide selon l'une quelconque des revendications 9 à 10, dans laquelle chacun des premier (31 ; 231) et deuxième (35 ; 235) éléments d'étanchéité est un joint torique.

12. Valve de contrôle de fluide selon l'une quelconque des revendications précédentes, dans laquelle, dans chacun des premier et deuxième canaux d'écoulement respectifs (9,13), la superficie de section transversale de l'ouverture de connexion extérieure respective (21,25) est supérieure à la superficie de section transversale de l'ouverture intérieure respective (19,23).

13. Procédé de formage d'un corps de valve (3) comportant une chambre de valve (5) s'étendant le long d'un axe central de valve (7), un premier canal d'écoulement (9) s'étendant le long d'un axe de premier canal d'écoulement (11) décrivant un angle par rapport à l'axe central de valve (7), et un deuxième canal d'écoulement (13) s'étendant le long d'un deuxième axe de canal d'écoulement (15) qui est parallèle à et décalé de l'axe de premier canal d'écoulement (11), une ouverture extérieure (21) du premier canal d'écoulement (9) et une ouverture extérieure (25) du deuxième canal d'écoulement (13) étant alignées le long d'un axe commun (24), ledit procédé comprenant :
le placement d'une pièce chauffée (44) dans une cavité d'outil de formage (47),
le pressage d'un premier noyau de forgeage (53) dans la pièce (44) le long de l'axe du premier canal d'écoulement (11) pour former le premier canal d'écoulement (9) et presser un deuxième noyau de forgeage (55) dans la pièce (44) le long de l'axe du deuxième canal d'écoulement (15) pour former le deuxième canal d'écoulement (13),
la rétraction de chacun des premier (53) et deuxième (55) noyaux de forgeage de la pièce (44) le long d'un axe de canal d'écoulement respectif (11,15).

14. Procédé selon la revendication 13, dans lequel les premier (53) et deuxième (55) noyaux de forgeage sont pressés simultanément dans la pièce chauffée (44).

15. Procédé selon l'une quelconque des revendications 13 à 14, ce procédé comprenant le pressage d'un troisième noyau de forgeage (57) dans la pièce (44) le long de l'axe central de chambre de valve (5).
